# EUROPEAN PATENT SPECIFICATION

(11) **EP 3 414 542 B1**
(45) Date of publication and mention of the grant of the patent: **22.07.2020**
(21) Application number: 17704067.2
(22) Date of filing: 06.02.2017
(51) Int. Cl.: G01M 11/00

(54) **OPTICAL TIME DOMAIN REFLECTOMETRY**
OPTISCHE ZEITBEREICHSREFLEKTOMETRIE
RÉFLECTOMÉTRIE OPTIQUE EN DOMAINE TEMPOREL

(30) Priority: 09.02.2016 GB 201602313
(43) Date of publication of application: 19.12.2018
(73) Proprietor: Neptune Subsea IP Limited, Romford RM3 0SD (GB)
(72) Inventor: IONESCU, Maria, Guildford Surrey GU2 7TZ (GB); DESBRUSLAIS, Stephen, New Eltham London SE9 2BD (GB)
(74) Representative: Barker Brettell LLP
(86) International application number: PCT/GB2017/050285
(87) International publication number: WO 2017/137729

(56) References cited:
- WO-A1-94/03785
- WO-A1-2011/120813
- JP-A- S59 116 025
- US-A1- 2008 077 343
- US-A1- 2009 027 656

## Description

The present invention relates to an apparatus and method for performing optical time domain reflectometry.

Optical time domain reflectometry (OTDR) is used to characterise an optical fibre, or an optical communications link (e.g. including multiple fibre spans and amplification stages). A series of optical pulses are transmitted into the fibre. The pulses are scattered or reflected from points along the link/fibre. The time delay between transmission of the pulses and receipt of a reflection indicates the distance of the reflecting location in the fibre/link. The strength of the return pulses as a function of time from the transmitted pulse can therefore be used to infer characteristics of the fibre. The round-trip time for the test pulse and reflection can be converted into a distance from the OTDR instrument. The performance of an OTDR instrument is typically characterised by the accuracy of a loss measurement, and by the trade-off between spatial resolution and dynamic range.

Long-distance undersea fibre communications links typically comprise multiple fibre spans, linked by optical amplification stages. Such links require characterisation, fault detection and localisation, for the purpose of performance monitoring and also to enable remedial action in the event of a fault.

There is typically a trade-off between the spatial resolution and dynamic range of an OTDR measurement. There is generally a limit to the laser power that can be used in a test pulse, and the detector has a minimum detectable reflected signal. A longer duration pulse can be used to increase the energy of the reflections, but this will come at the expense of spatial resolution - a longer duration pulse will not provide the spatial resolution that a shorter duration pulse would.

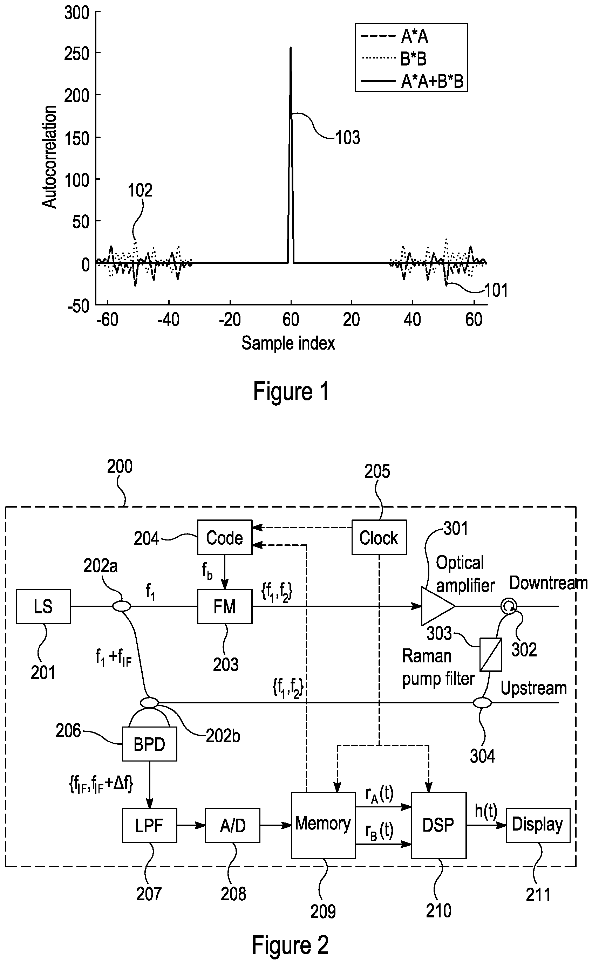

One approach for improving the trade-off between dynamic range and spatial resolution is to employ Golay codes as probe signals. The autocorrelations of a pair of complementary Golay codes have the property of adding to a delta function, as illustrated in Figure 1.

Figure 1 shows the autocorrelation of a first Golay code 101, and the autocorrelation of a second, complementary, Golay code 102. Adding the first autocorrelation 101 to the second 102 results in delta function 103. Reflections from a pair of complementary Golay code probe signals can therefore be used to approximate the reflections in response to a narrow, high power probe pulse (i.e. a delta function). This increase in power of the probe signal does not come at the expense of spatial resolution.

When coherent detection is employed with Golay codes, very narrow linewidth laser sources are necessary as the phase across the code needs to be maintained during the entire roundtrip time. As typical long-haul optical transmission distances are equivalent to roundtrip times of the order of 10-100 ms, phase coherence across the probe pulses is difficult to achieve in practice. One way to avoid these requirements is to resort to intensity modulation/direct detection (IM/DD), in which the two Golay code pairs (which are inherently bipolar), are split into four unipolar sequences and transmitted by amplitude modulation (as discussed in US5000568 and M. Nazarathy, et. al., "Real-time long range complementary correlation optical time domain reflectometry", Journal of Lightwave Technology, Vol. 7, No. 1, pp. 24-38, January 1989). This allows wider linewidth sources to be employed and measurements to be made that are independent of phase and polarisation fluctuations, but doubles the measurement time. US6046797 discloses using alternating the probe frequency between three different values to transmit a Golay code.

Coherent OTDRs employing Golay codes may be optimal in terms of the compromise between dynamic range and spatial resolution, but existing OTDRs employing Golay codes are difficult to implement due to stringent requirements for the laser source linewidth.

A further issue relates to amplification when performing OTDR in a system. Repeaters are typically provided along a fibre link, and these are unidirectional elements. Conventionally, two separate bi-directional fibre paths and a feedback between them and each of their corresponding amplifiers are necessary to monitor the link past the first repeater. In this setup, the first fibre span, the most susceptible to failure due to its proximity to the shore, cannot be monitored. Moreover, when the repeater technology is based on Raman amplification, part of the pump power will travel in the direction of the backscatter light and affect the OTDR measurements.

An improved apparatus and method for OTDR is desired.

US 2009/027656 discloses a system and method for time domain reflectometry (OTDR) using multi-resolution code sequences; one or more subsets of a set of predefined complementary code sequences may be transmitted as an OTDR signal to provide multi-resolution capability.

According to a zeroth aspect of the present invention, there is provided a method according to claim 1 and an optical time domain reflectometer according to claim 9. Optional features of the method and the reflectometer are set out in the dependent claims.

According to a first aspect of the invention, there is provided: a method of time domain reflectometry, comprising:
providing a source optical signal having a first frequency;
encoding and transmitting a first Golay code test signal and then a second complementary Golay code test signal along an optical fibre, wherein encoding the first and second Golay code test signals comprises using a frequency modulator on a first portion of the source optical signal such that one of the states of the Golay code is encoded as the first frequency, and another state of the Golay code is encoded as a second frequency, the second frequency being produced by shifting the frequency of the optical signal from the first frequency to the second frequency;
detecting reflections of the first and second Golay code test signals that are mixed with a second portion of the source optical signal at a heterodyne detector to produce a first and second detected reflection signal, respectively corresponding with reflections of the first and second Golay code test signals;
processing data derived from the first and second detected reflection signal to approximate reflections from the optical fibre in response to a delta function test signal.

The Golay code may be a bipolar Golay code having a first and second state. In other embodiments, an N-state Golay code may be used, encoded in N frequencies of light (one of the N frequencies being the first frequency).

The method comprises repeating the steps of encoding, transmitting and detecting, and producing a first and second average detected reflection signal respectively derived from the first and second detected reflection signal. The data may comprise a digitised version of the average reflection signal

Processing the data comprises the following steps:
for each of the first and second average detected reflection signals:
   i) determining a first time series of instantaneous power of the reflected signal frequency corresponding with the first frequency of the test signal;
   ii) determining a second time series of instantaneous power of the reflected signal frequency corresponding with the second frequency of the test signal; and
   iii) subtracting the second time series of instantaneous power from the first time series of instantaneous power to produce a time series of instantaneous power corresponding to a bipolar code;
correlating the bipolar code time series for the first average detected reflection signal with the first Golay code test signal to produce a first correlated signal;
correlating the bipolar code time series for the second average detected reflection signal with the second Golay code test signal to produce a second correlated signal; and
adding the first and second correlated signals so as to approximate reflections from the optical fibre in response to a delta function test signal.

The step of determining the first time series of instantaneous power of the reflected signals may comprise producing first downconverted reflection signals. Producing the first downconverted reflection signals may comprise mixing the first average detected reflection signal with a signal having a third frequency, the third frequency being substantially equal to the difference between the second and first frequencies. The step of determining the second time series of instantaneous power of the reflected signal may comprise producing a second downconverted reflection signal. Producing the second downconverted reflection signal may comprise mixing the second average detected reflection signal with a signal having the third frequency.

The third frequency may be selected to at least partially compensate for any changes in the frequency of the source signal during a round trip of the test signals.

Producing the first and second downconverted reflection signals may further comprise:
mixing the first average detected reflection signal with a signal having a fourth frequency, the fourth frequency selected to at least partially compensate for any changes in the frequency of the source signal during a round trip of the test signals; and
mixing the second average detected reflection signal with a signal having the fourth frequency.

Demodulating of both the first and second average detected reflection signal may be performed by a digital signal processor.

The method may further comprise low-pass filtering the downconverted first and second average detected reflection signals to produce demodulated first and second average detected reflection signals.

The method may further comprise squaring each of the first and second filtered demodulated average detected reflection signals. The method may further comprise summing signals after the step of squaring.

The processing step (or processing steps) may be performed using a digital signal processor.

The method may comprise using an electronic mixer to downconvert the first and second average detected reflection signals by mixing at least part of the first and second average detected reflection signals with an electronic local oscillator signal having a third frequency that is substantially equal to the difference between the second and first frequencies.

The detecting step may be performed using a fully coherent detector, to detect in-phase and quadrature horizontally polarised signals, and in-phase and quadrature vertically polarised signals.

The method may further comprise averaging the power detected by the fully coherent detector.

The step of detecting may be performed using at least one balanced photodiode (e.g. four, in the case of a coherent detector).

According to a second aspect, there is provided an optical time domain reflectometer, comprising:
a laser source, operable to output a source optical signal having a first frequency;
a frequency modulator arranged to receive a first portion of the source optical signal and configured to encode the first portion of the source optical signal with a a first Golay code test signal and a second complementary Golay code test signal, such that one of the states of the Golay codes is encoded as the first frequency, and another state of the Golay codes is encoded as a second frequency, the second frequency being produced by shifting the frequency of the optical signal from the first frequency to the second frequency;:
   an output interface for transmitting the first and second Golay code test signals along an optical fibre;
   an input interface for receiving reflections of the first and second Golay code from the optical fibre;
   a detector configured to receive a second portion of the source optical signal and the reflections from the input interface so as to heterodyne the reflections with the second portion of the source optical signal and produce a first and second detected reflection signal, respectively corresponding with the first and second Golay code test signals;
   a processor configured to process data derived from the first and second detected reflection signal to approximate reflections from the optical fibre in response to a delta function test signal.

The detector may comprise a balanced photodiode.

The reflectometer further comprises a low pass filter arranged to filter the first and second detected reflection signals, an analogue to digital converter, configured to receive the first and second detected reflection signals and a memory configured to store digitised first and second detected reflection signals. The memory may further be configured to average multiple reflection signals, and to store the average. The memory may store the first and second Golay codes used to encode the first and second Golay code test signals.

The reflectometer may further comprise a controller and a clock, wherein:
the controller is configured to provide a common clock signal to the memory and the frequency modulator, and to cause the frequency modulator to repeatedly transmit the first and second Golay code test signals; and
the memory is configured to use timing information from the clock to store an average of the reflections from the first and second Golay code test signals.

The controller may read the first and second Golay code from the memory.

The processor may comprise a digital signal processor.

The reflectometer may further comprise an electronic mixer configured to demodulate the second detected reflection signal by mixing the second detected reflection signal with an electronic local oscillator signal selected to have substantially the same frequency as the difference between the second and first frequencies.

The detector may comprise a fully coherent detector, configured to detect in-phase and quadrature horizontally polarised signals, and in-phase and quadrature vertically polarised signals.

The reflectometer may further comprise a display for displaying results derived from the processing of the data by the processor.

The reflectometer may comprise:
a downstream optical fibre for transmitting signals in a first direction, and an upstream optical fibre for transmitting signals in a second, opposite, direction;
an optical feedback path and a re-circulator, connecting a distal portion of the downstream optical fibre to a distal portion of the upstream optical fibre; and
wherein the output interface comprises the downstream optical fibre, and the input interface comprises the upstream optical fibre.

The reflectometer may further comprise at least one optical amplification stage before the downstream fibre between the frequency modulator and the re-circulator.

The optical feedback path may comprise a filter configured to remove a Raman pump wavelength.

The system may further comprise a Raman pump, configured to provide a Raman pump source to the downstream optical fibre so as to produce Raman amplification therein.

Each and every feature of the first aspect may be combined with the features of each and every feature of the second aspect or third aspect. Each of the features of the second and third aspects are also applicable to the first aspect.

Embodiments of the invention will now be described, purely by way of example, with reference to the accompanying drawings, in which:
Figure 1 is a graph illustrating the autocorrelation summation of complementary Golay codes;
Figure 2 is a block diagram of an OTDR system according to a first embodiment;
Figure 3 is a block diagram of the DSP of the first embodiment;
Figure 4 is a block diagram of an OTDR system according to a second embodiment, in which an electrical mixer is employed for demodulating one of the frequencies;
Figure 5 is a block diagram of an OTDR system according to a third embodiment, in which a full coherent receiver is used to detect the reflected signals;
Figure 6 is a graph showing simulation results of measurement of a 50km standard single mode fibre, with a lumped loss of 1dB from 20km and two 15dB reflections at 20km within the fibre and at the end of the fibre span;
Figure 7 is a graph showing the data displayed on Figure 6, showing the detail of the reflection at 20km; and
Figure 8 is a graph showing simulation results of measurement of five 50km standard single mode fibre spans, with a lumped loss of 1dB from 20km and a 15dB reflection at 20km within the fibre and at the end of the last fibre span.

Figure 1 shows a OTDR system comprising a reflectometer 200. The reflectometer 200 comprises a laser source 201, splitter/couplers 202a, 202b, frequency modulator 203, code block 204, clock 205, detector 206, low pass filter 207, analogue to digital converter 208, memory 209, digital signal processor 210; display 211; optical amplifier 301, re-circulator 302, feedback optical path 303 and combiner 304.

The laser source 201 provides a source optical signal with a first frequency f₁ to the splitter 202a, which sends a first portion of the source optical signal to the modulator 203, and a second portion to the detector 206. It will be appreciated that the first frequency may vary slightly due to the spectral bandwidth of the laser source 201.

The modulator 203 is configured to modulate the frequency of the first portion of the source optical signal between the first frequency f₁ and a second frequency f₂ (with f₂-f₁=Δf), in accordance with a code sequence provided by the code block 204. The code block 204 may read the code sequence from the memory 209. The code sequence may comprise a Golay code. In the resulting binary frequency shift key (BFSK) modulated signal the first frequency f₁ may represent a +1 of a bipolar Golay code, and the second frequency f₂ may represent a -1 of the bipolar Golay code. The output from the modulator 203 is sent as a probe signal along one or more fibre link 300, via an output interface (e.g. an optical fibre connector). The code block 204 receives a clock signal from the clock 205, and modulates the probe signal with a modulation rate f_{b}. The inverse of the modulation rate is the pulse width τ=1/f_{b}, which determines the spatial resolution of the measurement. As the code propagates, reflections of the partial code during the time t≤t₀+L·τ·r·v_{g}/2 is measured and the full code during the time t₀+L·τ·v_{g}/2 < t ≤ tᵣ, where t₀ is the time when the probe signal leaves the reflectometer, L is the code length, D is the total round trip distance for the fibre being interrogated, tᵣ=t₀+2·D/v_{g} is the roundtrip time of the fibre and v_{g} the speed of light in the fibre core.

The frequency modulator 203 may comprise an acoustic optic modulator (AOM) electro-optic modulator (EOM) Bragg cell or a Mach-Zehnder Interferometer (MZI).

The reflectometer 200 is for coupling to a first and second fibre, respectively for carrying communication signals in a downstream and an upstream direction.

The reflectometer 200 comprises one or more optically pumped amplifiers 301. Optically pumped amplifiers 301 are generally unidirectional so would prevent reflections from propagating against the flow of the signal. A cross coupler 303 is therefore provided between the downstream and upstream optical fibres after each amplifier 301 (or the final amplifier), so that reflections from the fibre downstream of the amplifier 301 will be coupled into the upstream fibre to return to the reflectometer 200. In order to avoid Raman pump signals (used for Raman amplification) from interfering with the measurement, a Raman pump filter may be included in the cross coupler 303. Reflections from the first span of fibre under test in the downstream direction are coupled into the cross coupler 303 by re-circulator 302, and the reflected signals from the cross coupler 303 are coupled to the upstream optical fibre by coupler 304 to join reflected signals arriving at the coupler 304 from the upstream optical fibre. The fibre under test may include similar cross couplers after each amplification stage, so as to return reflected signals to the reflectometer 200 via the upstream fibre.

The second portion of the source optical signal from the coupler 202a is provided to the detector 206, which also receives reflection signals via the upstream optical fibre. The detector 206 optically heterodynes the second portion of the source optical signal, having the first frequency f₁, with the reflection signal, which is modulated, so includes the first frequency f₁ and the second frequency f₂. The effect of the mixing at the detector 206 will produce lower sidebands in the output of the detector 206. The source frequency may not be perfectly stable, which may result in a frequency deviation f_{IF} between the first frequency of the first portion of the source optical signal at the moment of transmission and the frequency of the second portion of the optical signal at the moment of reception. The result of optical heterodyning may therefore be a signal with frequencies of f_{IF} and f_{IF}+f₂-f₁.

The detector 206 may be a balanced photodiode, with the first and second sides of the balanced photodiode both receiving the second portion of the source signal and the reflection signal from the upstream optical fibre (via the coupler 202b).

The signal from the detector 206 is provided to the low pass filter 207, which provides anti-aliasing for the analogue to digital converter (ADC) 208 and removes the upper sidebands from the signal, leaving the frequency f_{b}, corresponding with the power of the first frequency (e.g. the reflections from the +1 part of the Golay code probe signal) and the frequency (f₂-f₁) (e.g. corresponding with the reflections from the -1 part of the Golay code probe signal).

The output from the low pass filter 207 is provided to the ADC 208, which samples the signal at a rate fₛ, sufficient to fully capture the frequency f₂-f₁ (e.g. fₛ≥ 2Δf). The output of the ADC 208 is received by memory block 209.

Each probe signal may produce a relatively noisy reflection signal. The signal to noise ratio of the detected reflections can be improved by repeating the process of sending a probe signal and receiving the reflections, and then averaging the signals that result (from the ADC). The clock 205 therefore provides the clock signal to both the code block 204 and the memory 209. The code block 204 is configured to encode the probe signal (using the frequency modulator 203), then wait for a period of time corresponding with the expected round trip time for the probe signal (and reflection from the end of the fibre link 300), then repeat the probe signal.

Since the memory block 209 receives the same clock signal as the code block 204, the memory block 209 can synchronise its operation with the probe signal transmission, and average the reflection signals corresponding with each time of flight (i.e. location in the fibre link 300). This averaging may be done as the signals are repeated, so as to avoid the need for storing the reflection signal from each cycle of the averaging process.

In some embodiments, a first Golay code probe may be followed by a second complementary Golay code probe. This cycle may be repeated to build up an average signal in the memory. Alternatively, a number of first Golay code probe signal reflections may be averaged, and then a number of second Golay code probe signal reflections may be averaged.

Once a suitable number of averaging cycles (e.g. at least 100, 500, 1000 or 10000) are completed, an average reflection signal for the first and second Golay code probe signals will be stored in the memory 209. These average signals are further processed by the digital signal processor (DSP) to approximate the reflections from the fibre link 300 in response to an impulse (delta function) probe signal.

The reflection return power in response to a delta function may be plotted or otherwise displayed on the optional display 211. Alternatively, the results may be transmitted for display or further processing elsewhere.

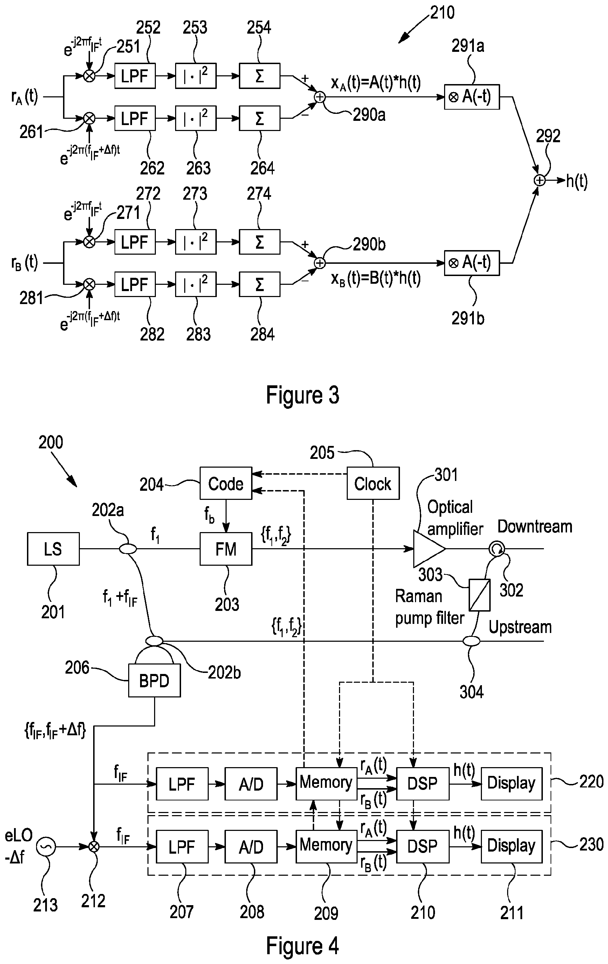

An example DSP configuration is shown in Figure 3. The upper leg of the DSP block diagram receives the averaged signal r_{A}(t) from the memory, corresponding with the reflections from the first Golay code, and the lower leg of the DSP block diagram receives the averaged signal r_{B}(t), corresponding with the reflections from the second Golay code. Both the upper and lower legs process the averaged signals in the same way, up to the convolution block 291.

Considering the upper leg, the averaged signal r_{A}(t) is mixed (at mixer 251) with a generated local signal at an intermediate frequency f_{IF} which compensates for any drift in the first frequency of the laser source 201 (e.g. between the time of transmission and detection), leaving a signal spectrum centred at DC (direct current), that corresponds with a time history of the power of the first frequency f₁ in the reflections. The DSP 210 may determine an appropriate frequency f_{IF}, for instance by searching for the maximum of a function calculated from the spectral distribution of the averaged signal r_{A}(t).

The averaged signal r_{A}(t) is also mixed (at mixer 261) with a signal having a frequency of (f_{IF}+Δf), where Δf is (f₂-f₁). This demodulates the reflection signals from the second frequency f₂. The output from the mixer 251 is provided to squaring and summing blocks 253, 254 which results in a time history of the instantaneous average power of the reflections of the first frequency f₁. Squaring of the data means that any phase information is discarded, which means that the stringent laser source linewidth requirements can be relaxed.

The output from the summation block 264 is similarly a time history of the instantaneous average power of the reflections of the second frequency f₂. Combining these two signals together at the summation block 290a, and giving the second frequency f₂ a negative sign results in the reflected bipolar Golay code (i.e. reflected signals from f₁ and reflected signals from f₂ are complementary).

The lower leg of the DSP operates in a similar way on the reflections r_{B}(t) from the second Golay code.

In order to approximate the reflections in response to a delta function, it is necessary to add the autocorrelations of the reflections from the complementary Golay codes. An autocorrelation operation is equivalent to convolving the output x_{A}(t), x_{B}(t) from the summation blocks 290a, 290b with the corresponding time inverted Golay codes A(-t) and B(-t), as shown on blocks 291a and 291b respectively. The autocorrelation of the reflections from the first and second Golay codes are added at block 292, which results in an approximation of the reflections h(t) from an impulse (delta function) probe signal.

Figure 4 shows an alternative embodiment with similar features to the embodiment of Figure 2, except that an analogue electrical mixer 212 is used to demodulate the second frequency f₂, by mixing the output from the detector 206 with a signal from a local electrical oscillator 213 having frequency Δf (Δf=f₂-f₁). This means that the ADC 208 does not need to sample as quickly, potentially simplifying the ADC 208 and reducing the cost of the instrument 200.

The subsequent chain of low pass filter 207, ADC 208, memory 209 and DSP 210 function in substantially the same way as the embodiment of Figures 2 and 3, except that the DSP stage 210 no longer needs to downmix the frequency Δf (although a DSP mixing stage may still be retained to compensate for frequency instability in the output of the source 201).

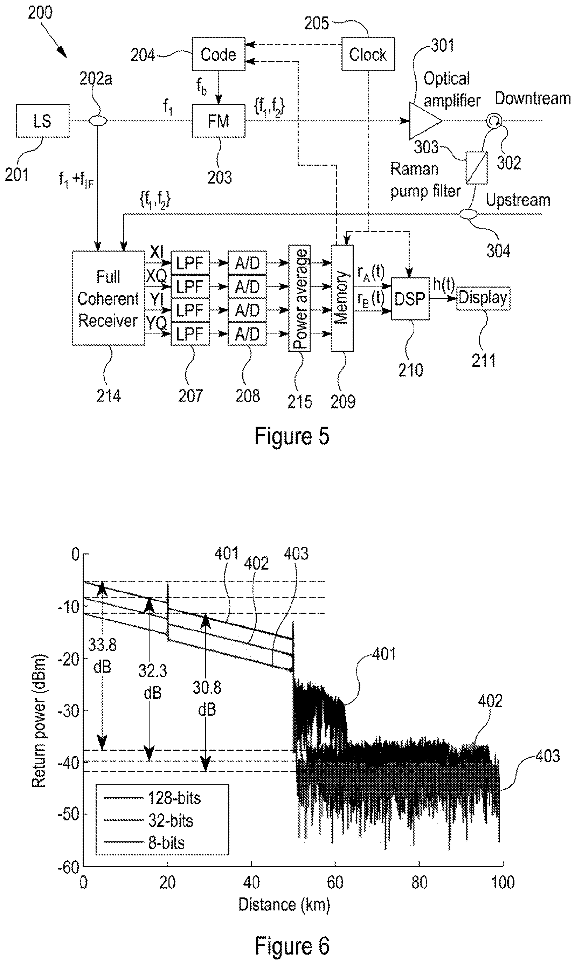

Figure 5 shows a further alternative embodiment, in which a full coherent receiver is used to detect both horizontally polarised signals X and vertically polarised signals Y in both in-phase I and quadrature Q. Each of these four detection channels may be low pass filtered in filter stage 207, and then converted to a digital signal at a subsequent ADC stage 208. A power averaging block 215 is provided to average the instantaneous power for the reflections detected by each channel of the coherent detector 214. In some embodiments this power averaging may be performed in the memory block stage 209.

The memory 209 stores and averages the average output from the detector channels over the number of cycles that the code is transmitted. The DSP 210 receives the average power stored by the memory, and operates in a similar way as described with reference to Figure 3.

In this embodiment, regardless of the polarisation scrambling of the backscattered light, the full return power of the probe signal can be measured, such that a further 6dB improvement in dynamic range (or alternatively, a 3dB improvement in the SWDR) is obtained.

In all embodiments, the use of complementary Golay codes mean that a substantially constant average power is maintained across any optical amplifiers in the fibre link under test, so that they will continue to operate in a saturation mode for the duration of fibre characterisation (which removes any need for gain control of these amplifiers during test). At the end of the modulation period, the source 201 is maintained in continuous wave operation, at a power equal to the average power of the launched modulated codes, to further maintain the constant gain of the amplifiers.

Monitoring (or measurement) of the first fibre span is enabled by the provision of a feedback path between the input and output fibres (i.e. the cross coupler 303 in each of Figures 2, 4 and 5). The use of a Raman pump filter in this cross coupling pathway avoids the backscatter measurements being affected by Raman pump light.

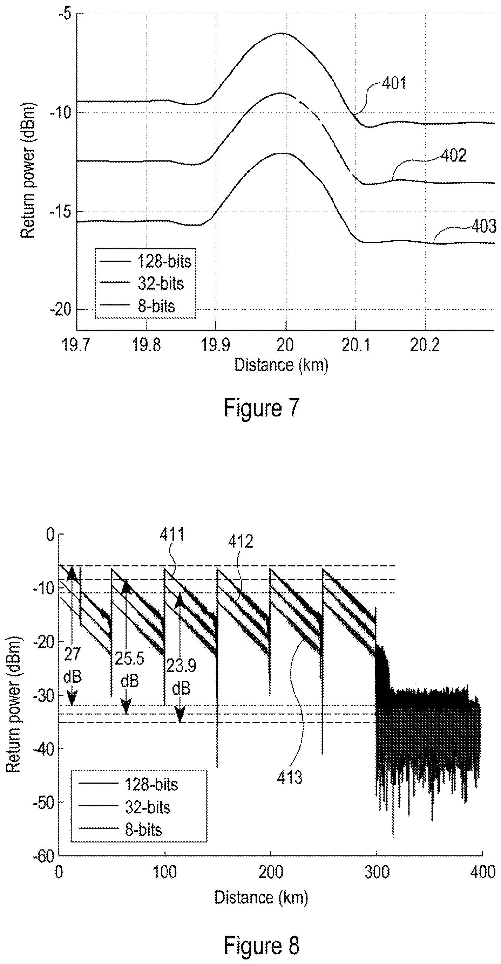

Figure 6 shows simulated results from a reflectometer according to the embodiment of Figure 2. A 50km single-span SSMF (standard single mode fibre) is characterised, including measuring the attenuation coefficient of 0.2 dB/km, detecting lumped losses and localised reflection points. A 1dB lumped loss at 20km, and two 15db reflections one at 20km and the other at the end of the link were simulated. The results in Figure 6 compare Golay codes of 8 bits (403) 32 bits (402), and 128 bits (401). Figure 7 illustrates the spatial resolution at the reflection at 20km.

By employing 1µs pulses, a 200m spatial resolution is possible: twice the resolution obtainable with conventional C-OTDR. This doubling in resolution is due to the full-width of the autocorrelation function. A 1.5dB improvement in the SWDR (single-way dynamic range) with every 4-fold increase in Golay code length , as well as a ∼2.6dB improvement in SWDR compared to the sequential IM/DD approach of the prior art are demonstrated.

A multi-span characterisation is demonstrated in Figure 8, in which results from a 128 bit Golay code (411), 32 bit Golay code (412) and 8 bit Golay code (413) are illustrated. There are five 50km SSMF fibre spans, with a lumped 1dB loss at 20km and a 15dB reflection at 20km and at the end of the last fibre span. The pulse width was 1µs.

Embodiments of the present invention may provide a number of advantages over prior art reflectometers. A reduced number of frequencies may be required for the probe signals, reducing the complexity of the frequency modulation arrangement. Transitions between frequencies complementary code values (e.g.f₁ and f₂, corresponding with +1 and -1) may be more rapid, without the need to transition through an intermediate frequency. A single frequency modulator (e.g. providing only a fixed single shift in frequency) can be used in some embodiments. Optical heterodyning may be simplified: a single unmodulated frequency may be mixed with the returning reflections to downconvert the signals (e.g. suitable for ADC and subsequent DSP processing). In some embodiments a single detector may be used to detect the reflected signals. Embodiments of the invention may be insensitive to polarisation scrambling of the reflected signals.

Although a number of examples have been described these are not intended to be limiting. A number of other variations are possible, within the scope of the invention, which is limited only by the appended claims.

## Claims

1. A method of time domain reflectometry for inferring characteristics of an optical fibre, comprising:
providing a source optical signal having a first frequency (f₁);
encoding and transmitting a first Golay code test signal and then a second complementary Golay code test signal along the optical fibre, the first Golay code test signal and the second complementary Golay code test signal each comprising multiple states, wherein encoding the first and second Golay code test signals comprises using a frequency modulator (203) on a first portion of the source optical signal such that one of the states of the Golay code is encoded as the first frequency (f₁), and another state of the Golay code is encoded as a second frequency (f₂), the second frequency (f₂) being produced by shifting the frequency of the optical signal from the first frequency (f₁) to the second frequency (f₂);
detecting reflections of the first and second Golay code test signals that are mixed with a second portion of the source optical signal at a heterodyne detector (206) to produce a first and second detected reflection signal, respectively corresponding with reflections of the first and second Golay code test signals;
**characterised in** repeating the steps of encoding, transmitting and detecting, and producing a first and second average detected reflection signal respectively derived from the first and second detected reflection signal;
processing data derived from the first and second detected reflection signal to approximate reflections from the optical fibre in response to a delta function test signal, wherein processing the data comprises the following steps:
for each of the first and second average detected reflection signals:
i) determining a first time series of instantaneous power of the reflected signal frequency corresponding with the first frequency of the test signal;
ii) determining a second time series of instantaneous power of the reflected signal frequency corresponding with the second frequency of the test signal; and
iii) subtracting the second time series of instantaneous power from the first time series of instantaneous power to produce a time series of instantaneous power corresponding to a bipolar code;
correlating the bipolar code time series for the first average detected reflection signal with the first Golay code test signal to produce a first correlated signal;
correlating the bipolar code time series for the second average detected reflection signal with the second Golay code test signal to produce a second correlated signal; and
adding the first and second correlated signals so as to approximate reflections from the optical fibre in response to a delta function test signal.

2. The method of claim 1, wherein the Golay code is a bipolar Golay code having a first and second state.

3. The method of claim 1 or 2, wherein:
the step of determining the first time series of instantaneous power of the reflected signal comprises producing a first downconverted reflection signal, wherein producing the first downconverted reflection signals comprises mixing the first average detected reflection signal with a signal having a third frequency (Δf), the third frequency (Δf) being substantially equal to the difference between the second and first frequencies; and
the step of determining the second time series of instantaneous power of the reflected signal comprises producing a second downconverted reflection signal, wherein producing the second downconverted reflection signals comprises mixing the second average detected reflection signal with a signal having the third frequency (Δf).

4. The method of claim 3, wherein producing the first and second downconverted reflection signals further comprises:
mixing the first average detected reflection signal with a signal having a fourth frequency, the fourth frequency selected to at least partially compensate for any changes in the frequency of the source signal during a round trip of the test signals; and
mixing the second average detected reflection signal with a signal having the fourth frequency, and optionally wherein the third frequency is selected to compensate for any changes in the frequency of the source signal during a round trip of the test signals and reflections.

5. The method of claim 4, wherein the downcoverting of both the first and second average detected reflection signal is performed by a digital signal processor (210).

6. The method of any of claims 4 or 5, further comprising low-pass filtering the downconverted first and second average detected reflection signals to produce demodulated average detected reflection signals, and optionally further comprising squaring each of the first and second filtered demodulated average detected reflection signals.

7. The method of any preceding claim, wherein the processing step is performed using a digital signal processor (210).

8. The method of any preceding claim, comprising using an electronic mixer to downconvert the first and second average detected reflection signals by mixing at last part of the first and second average detected reflection signal with an electronic local oscillator signal having a third frequency that is substantially equal to the difference between the second and first frequencies; and/or
wherein the detecting step is performed using a fully coherent detector (214), to detect in-phase and quadrature horizontally polarised signals, and in-phase and quadrature vertically polarised signals, and optionally further comprising averaging the power detected by the fully coherent detector (214); and/or
wherein the step of detecting is performed using at least one balanced photodiode.

9. An optical time domain reflectometer (200) for inferring characteristics of an optical fibre, comprising:
a laser source (201), operable to output a source optical signal having a first frequency (f₁);
a frequency modulator (203) arranged to receive a first portion of the source optical signal and configured to encode the first portion of the source optical signal with a first Golay code test signal and a second complementary Golay code test signal, the first Golay code test signal and the second complementary Golay code test signal each comprising multiple states, wherein the frequency modulator is configured to encode the first portion of the source optical signal with the first Golay code test signal and the second complementary Golay code test signal such that one of the states of the Golay codes is encoded as the first frequency (f₁), and another state of the Golay codes is encoded as a second frequency (f₂), the second frequency (f₂) being produced by shifting the frequency of the optical signal from the first frequency (f₁) to the second frequency (f₂);
an output interface for transmitting the first and second Golay code test signals along the optical fibre;
an input interface for receiving reflections of the first and second Golay code from the optical fibre;
a detector (206, 214) configured to receive a second portion of the source optical signal and the reflections from the input interface so as to heterodyne the reflections with the second portion of the source optical signal and produce a first and second detected reflection signal, respectively corresponding with the first and second Golay code test signals;
a low pass filter (207) arranged to filter the first and second detected reflection signals;
an analogue to digital converter (208), configured to receive the first and second detected reflection signals;
a memory (209) configured to store digitised first and second detected reflection signals;
a controller and a clock (205), **characterised in that**
the controller is configured to provide a common clock signal to the memory (209) and the frequency modulator (203), and to cause the frequency modulator (203) to repeatedly transmit the first and second Golay code test signals;
the memory (209) is configured to use timing information from the clock (205) to store an average of the reflections from the first and second Golay code test signals; and
a processor (210) configured to process data derived from the first and second detected reflection signal to approximate reflections from the optical fibre in response to a delta function test signal;
wherein the reflectometer (200) is configured to perform the method of any of claims 1 to 8.

10. The reflectometer (200) of claim 9, wherein the detector (206, 214) comprises a balanced photodiode.

11. The reflectometer (200) of any of claims 9 or 10, wherein the processor (210) comprises a digital signal processor; and/or
further comprising an electronic mixer configured to demodulate the second detected reflection signal by mixing the second detected reflection signal with an electronic local oscillator signal selected to have substantially the same frequency as the difference between the second and first frequencies; and/or
wherein the detector comprises a fully coherent detector (214), configured to detect in-phase and quadrature horizontally polarised signals, and in-phase and quadrature vertically polarised signals; and/or
further comprising a display (211) for displaying results derived from the processing of the data by the processor (210).

12. The reflectometer (200) of any preceding claim, further comprising:
a downstream optical fibre for transmitting signals in a first direction, and an upstream optical fibre for transmitting signals in a second, opposite, direction;
an optical feedback path (303) and a re-circulator (302), connecting a portion of the downstream optical fibre to a portion of the upstream optical fibre;
wherein the output interface comprises the downstream optical fibre, and the input interface comprises the upstream optical fibre; and
optionally further comprising at least one optical amplification stage (301) coupled to the downstream fibre between the frequency modulator (203) and the re-circulator (302).

13. The reflectometer (200) of claim 12, wherein the optical feedback path (302) comprises a filter configured to remove a Raman pump wavelength.

14. An optical system comprising an optical fibre link and the reflectometer (200) of any of claims 9 to 11, wherein:
the optical fibre link comprises a first span of downstream optical fibre and a first span of upstream optical fibre;
the output interface of the reflectometer (200) is connected to the first span of downstream optical fibre, and the input interface of the reflectometer is connected to the first span of upstream optical fibre.

15. The system of claim 14, further comprising at least one further span of downstream and upstream optical fibre and at least one optical amplifier disposed between each span; and optionally wherein the at least one optical amplifier (301) comprises a Raman pump, configured to provide a Raman pump source to at least one of the fibres of at least one optical span, so as to produce Raman amplification therein.

## Patentansprüche

1. Verfahren zur Reflexionsmessung im Zeitbereich zum Ableiten von Charakteristiken einer optischen Faser, umfassend:
Bereitstellen eines optischen Quellensignals mit einer ersten Frequenz (f₁);
Codieren und Senden eines ersten Golay-Code-Prüfsignals und anschließend eines zweiten komplementären Golay-Code-Prüfsignals entlang der optischen Faser, wobei das erste Golay-Code-Prüfsignal und das zweite komplementäre Golay-Code-Prüfsignal jeweils mehrere Zustände umfassen, wobei das Codieren des ersten und des zweiten Golay-Code-Prüfsignals ein Anwenden eines Frequenzmodulators (203) auf einen ersten Abschnitt des optischen Quellensignals umfasst, derart dass einer der Zustände des Golay-Codes als die erste Frequenz (f₁) codiert wird, und ein anderer Zustand des Golay-Codes als eine zweite Frequenz (f₂) codiert wird, wobei die zweite Frequenz (f₂) durch Verschieben der Frequenz des optischen Signals von der ersten Frequenz (f₁) zur zweiten Frequenz (f₂) erzeugt wird;
Detektieren von Reflexionen des ersten und des zweiten Golay-Code-Prüfsignals, die mit einem zweiten Abschnitt des optischen Quellensignals an einem Überlagerungsdetektor (206) gemischt werden, um ein erstes und ein zweites detektiertes Reflexionssignal zu erzeugen, die Reflexionen des ersten bzw. des zweiten Golay-Code-Prüfsignals entsprechen;
**gekennzeichnet durch**
Wiederholen der Schritte des Codierens, Sendens und Detektierens und Erzeugen eines ersten und eines zweiten durchschnittlichen detektierten Reflexionssignals, die vom ersten bzw. zweiten detektierten Reflexionssignal abgeleitet werden;
Verarbeiten von Daten, die vom ersten und zweiten detektierten Reflexionssignal abgeleitet sind, zum Nähern von Reflexionen von der optischen Faser in Reaktion auf ein Deltafunktionsprüfsignal, wobei das Verarbeiten der Daten die folgenden Schritte umfasst:
für jedes des ersten und des zweiten durchschnittlichen detektierten Reflexionssignals:
i) Bestimmen einer ersten Zeitreihe von Momentanleistung der Frequenz des reflektierten Signals, die der ersten Frequenz des Prüfsignals entspricht;
ii) Bestimmen einer zweiten Zeitreihe von Momentanleistung der Frequenz des reflektierten Signals, die der zweiten Frequenz des Prüfsignals entspricht; und
iii) Subtrahieren der zweiten Zeitreihe von Momentanleistung von der ersten Zeitreihe von Momentanleistung, um eine Zeitreihe von Momentanleistung zu erzeugen, die einem Bipolarcode entspricht;
Korrelieren der Bipolarcode-Zeitreihe für das erste durchschnittliche detektierte Reflexionssignal mit dem ersten Golay-Code-Prüfsignal, um ein erstes korreliertes Signal zu erzeugen;
Korrelieren der Bipolarcode-Zeitreihe für das zweite durchschnittliche detektierte Reflexionssignal mit dem zweiten Golay-Code-Prüfsignal, um ein zweites korreliertes Signal zu erzeugen; und
Addieren des ersten und des zweiten korrelierten Signals, um Reflexionen von der optischen Faser in Reaktion auf ein Deltafunktionsprüfsignal zu nähern.

2. Verfahren nach Anspruch 1, wobei der Golay-Code ein Golay-Bipolarcode mit einem ersten und einem zweiten Zustand ist.

3. Verfahren nach Anspruch 1 oder 2, wobei:
der Schritt des Bestimmens der ersten Zeitreihe von Momentanleistung des reflektierten Signals ein Erzeugen eines ersten abwärts gemischten Reflexionssignals umfasst, wobei das Erzeugen des ersten abwärts gemischten Reflexionssignals ein Mischen des ersten durchschnittlichen detektierten Reflexionssignals mit einem Signal mit einer dritten Frequenz (Δf) umfasst, wobei die dritte Frequenz (Δf) im Wesentlichen gleich der Differenz zwischen der zweiten und der ersten Frequenz ist; und
der Schritt des Bestimmens der zweiten Zeitreihe von Momentanleistung des reflektierten Signals ein Erzeugen eines zweiten abwärts gemischten Reflexionssignals umfasst, wobei das Erzeugen des zweiten abwärts gemischten Reflexionssignals ein Mischen des zweiten durchschnittlichen detektierten Reflexionssignals mit einem Signal mit der dritten Frequenz (Δf) umfasst.

4. Verfahren nach Anspruch 3, wobei das Erzeugen des ersten und des zweiten abwärts gemischten Reflexionssignals ferner umfasst:
Mischen des ersten durchschnittlichen detektierten Reflexionssignals mit einem Signal mit einer vierten Frequenz, wobei die vierte Frequenz ausgewählt wird, um Änderungen der Frequenz des Quellensignals während eines Umlaufs des Prüfsignals wenigstens teilweise zu kompensieren; und
Mischen des zweiten durchschnittlichen detektierten Reflexionssignals mit einem Signal mit der vierten Frequenz, und wobei optional die dritte Frequenz ausgewählt wird, um Änderungen der Frequenz des Quellensignals während eines Umlaufs des Prüfsignals und Reflexionen zu kompensieren.

5. Verfahren nach Anspruch 4, wobei das Abwärtsmischen von beiden des ersten und des zweiten durchschnittlichen detektierten Reflexionssignals von einem digitalen Signalprozessor (210) durchgeführt wird.

6. Verfahren nach einem der Ansprüche 4 oder 5, ferner umfassend ein Tiefpassfiltern des ersten und des zweiten abwärts gemischten durchschnittlichen detektierten Reflexionssignals, um demodulierte durchschnittliche detektierte Reflexionssignale zu erzeugen, und ferner optional umfassend ein Quadrieren eines jeden von dem ersten und dem zweiten gefilterten demodulierten durchschnittlichen detektierten Reflexionssignal.

7. Verfahren nach einem der vorherigen Ansprüche, wobei der Verarbeitungsschritt unter Verwendung eines digitalen Signalprozessors (210) ausgeführt wird.

8. Verfahren nach einem der vorhergehenden Ansprüche, umfassend ein Verwenden eines elektronischen Mischers zum Abwärtsmischen des erste und des zweiten durchschnittlichen detektierten Reflexionssignals durch Mischen mindestens eines Teils des ersten und des zweiten durchschnittlichen detektierten Reflexionssignals mit einem Signal eines elektronischen Empfangsoszillators, das eine dritte Frequenz aufweist, die im Wesentlichen gleich der dritten Differenz zwischen der zweiten und der ersten Frequenz ist; und/oder
wobei der Detektionsschritt unter Verwendung eines voll kohärenten Detektors (214) ausgeführt wird, um horizontal polarisierte Inphase- und Quadratur-Signale und vertikal polarisierte Inphase- und Quadratur-Signale zu detektieren, und optional ferner umfassend ein Mitteln der Leistung, die vom voll kohärenten Detektor (214) detektiert wird; und/oder
wobei der Schritt des Detektierens unter Verwendung mindestens einer symmetrischen Fotodiode ausgeführt wird.

9. Optischer Zeitbereichsreflexionsmesser (200) zum Ableiten von Charakteristiken einer optischen Faser, umfassend:
eine Laserquelle (201), die zum Ausgeben eines optischen Quellensignals mit einer ersten Frequenz (f₁) ausgelegt ist;
einen Frequenzmodulator (203), der zum Empfangen eines ersten Abschnitts des optischen Quellensignals ausgelegt und zum Codieren des ersten Abschnitts des optischen Quellensignals mit einem ersten Golay-Code-Prüfsignal und einem zweiten komplementären Golay-Code-Prüfsignal konfiguriert ist, wobei das erste Golay-Code-Prüfsignal und das zweite komplementäre Golay-Code-Prüfsignal jeweils mehrere Zustände umfassen, wobei der Frequenzmodulator zum derartigen Codieren des ersten Abschnitts des optischen Quellensignals mit dem ersten und dem zweiten Golay-Code-Prüfsignal konfiguriert ist, dass einer der Zustände der Golay-Codes als die erste Frequenz (f₁) codiert wird, und ein anderer Zustand der Golay-Codes als eine zweite Frequenz (f₂) codiert wird, wobei die zweite Frequenz (f₂) durch Verschieben der Frequenz des optischen Signals von der ersten Frequenz (f₁) zur zweiten Frequenz (f₂) erzeugt wird;
eine Ausgangsschnittstelle zum Senden des ersten und des zweiten Golay-Code-Prüfsignals entlang der optischen Faser;
eine Eingangsschnittstelle zum Empfangen von Reflexionen des ersten und des zweiten Golay-Codes von der optischen Faser;
einen Detektor (206, 214), der zum Empfangen eines zweiten Abschnitts des optischen Quellensignals und der Reflexionen von der Eingangsschnittstelle konfiguriert ist, um die Reflexionen mit dem zweiten Abschnitt des optischen Quellensignals zu überlagern und ein erstes und ein zweites detektiertes Reflexionssignal zu erzeugen, die dem ersten bzw. dem zweiten Golay-Code-Prüfsignal entsprechen;
ein Tiefpassfilter (207), das zum Filtern des ersten und des zweiten detektierten Reflexionssignals ausgelegt ist;
einen Analog-Digital-Wandler (208), der zum Empfangen des ersten und des zweiten detektierten Reflexionssignals konfiguriert ist;
einen Speicher (209), der zum Speichern von digitalisierten ersten und zweiten detektierten Reflexionssignalen konfiguriert ist;
eine Steuerung und einen Taktgeber (205), **dadurch gekennzeichnet, dass**
die Steuerung so konfiguriert ist, dass sie ein gemeinsames Taktsignal für den Speicher (209) und den Frequenzmodulator (203) bereitstellt und den Frequenzmodulator (203) zum wiederholten Senden des ersten und des zweiten Golay-Code-Prüfsignals veranlasst;
der Speicher (209), so konfiguriert ist, dass er Taktinformationen vom Taktgeber (205) zum Speichern eines Durchschnitts der Reflexionen vom ersten und zweiten Golay-Code-Prüfsignal verwendet; und
einen Prozessor (210), der so konfiguriert ist, dass er Daten, die vom ersten und zweiten detektierten Reflexionssignal abgeleitet werden, verarbeitet, um Reflexionen von der optischen Faser in Reaktion auf ein Deltafunktionsprüfsignal zu nähern;
wobei der Reflexionsmesser (200) zum Durchführen des Verfahrens nach einem der Ansprüche 1 bis 8 konfiguriert ist.

10. Reflexionsmesser (200) nach Anspruch 9, wobei der Detektor (206, 214) eine symmetrische Fotodiode umfasst.

11. Reflexionsmesser (200) nach einem der Ansprüche 9 oder 10, wobei der Prozessor (210) einen digitalen Signalprozessor umfasst; und/oder
ferner umfassend einen elektronischen Mischer, der so konfiguriert ist, dass er das zweite detektierte Reflexionssignal durch Mischen des zweiten detektierten Reflexionssignals mit einem Signal eines elektronischen Empfangsoszillators demoduliert, das so ausgewählt ist, dass es im Wesentlichen die gleiche Frequenz wie die Differenz zwischen der zweiten und der ersten Frequenz aufweist; und/oder
wobei der Detektor einen voll kohärenten Detektor (214) umfasst, der zum Detektieren von horizontal polarisierten Inphase- und Quadratur-Signalen und vertikal polarisierten Inphase- und Quadratur-Signalen konfiguriert ist; und/oder
ferner umfassend eine Anzeige (211) zum Anzeigen von Ergebnissen, die von der Verarbeitung der Daten durch den Prozessor (210) abgeleitet sind.

12. Reflexionsmesser (200) nach einem der vorhergehenden Ansprüche, ferner umfassend:
eine optische Downstream-Faser zum Senden von Signalen in einer ersten Richtung und eine optische Upstream-Faser zum Senden von Signalen in einer zweiten, entgegengesetzten Richtung;
einen optischen Rückkopplungspfad (303) und einen Rezirkulator (302), der einen Abschnitt der optischen Downstream-Faser mit einem Abschnitt der optischen Upstream-Faser verbindet;
wobei die Ausgangsschnittstelle die optische Downstream-Faser umfasst, und die Eingangsschnittstelle die optische Upstream-Faser umfasst; und
optional ferner umfassend mindestens eine optische Verstärkungsstufe (301), die mit der Downstream-Faser zwischen dem Frequenzmodulator (203) und dem Rezirkulator (302) gekoppelt ist.

13. Reflexionsmesser (200) nach Anspruch 12, wobei der optische Rückkopplungspfad (302) ein Filter umfasst, das zum Entfernen einer Raman-Pumpenwellenlänge konfiguriert ist.

14. Optisches System, umfassend eine optische Faserverbindung und den Reflexionsmesser (200) nach einem der Ansprüche 9 bis 11, wobei
die optische Faserverbindung einen ersten Bereich einer optischen Downstream-Faser und einen ersten Bereich einer optischen Upstream-Faser umfasst;
die Ausgangsschnittstelle des Reflexionsmessers (200) mit dem ersten Bereich der optischen Downstream-Faser verbunden ist, und die Eingangsschnittstelle des Reflexionsmessers mit dem ersten Bereich der optischen Upstream-Faser verbunden ist.

15. System nach Anspruch 14, ferner umfassend mindestens einen weiteren Bereich von optischer Downstream- und Upstream-Faser und mindestens einen optischen Verstärker, der zwischen jedem Bereich angeordnet ist; und wobei optional der mindestens eine optische Verstärker (301) eine Raman-Pumpe umfasst, die zum Bereitstellen einer Raman-Pumpenquelle für mindestens eine der Fasern mindestens eines optischen Bereichs konfiguriert ist, um Raman-Verstärkung darin zu erzeugen.

## Revendications

1. Procédé de réflectométrie en domaine temporel destiné à déduire des caractéristiques d'une fibre optique, comprenant :
la fourniture d'un signal optique de source ayant une première fréquence (f₁) ;
le codage et la transmission d'un premier signal de test de code de Golay puis d'un second signal de test de code de Golay complémentaire le long de la fibre optique, le premier signal de test de code de Golay et le second signal de test de code de Golay complémentaire comprenant chacun plusieurs états, le codage des premier et second signaux de test de code de Golay comprenant l'utilisation d'un modulateur de fréquence (203) sur une première partie du signal optique de source de telle sorte que l'un des états du code de Golay est codé comme étant la première fréquence (f₁), et un autre état du code de Golay est codé comme étant une deuxième fréquence (f₂), la deuxième fréquence (f₂) étant produite en décalant la fréquence du signal optique de la première fréquence (f₁) vers la deuxième fréquence (f₂) ;
la détection des réflexions des premier et second signaux de test de code de Golay qui sont mélangés avec une seconde partie du signal optique de source au niveau d'un détecteur hétérodyne (206) pour produire un premier et un second signal de réflexion détectée, correspondant respectivement aux réflexions des premier et second signaux de test de code de Golay ;
**caractérisé par** la répétition des étapes de codage, de transmission et de détection, et par la production d'un premier et d'un second signal de réflexion détectée moyenne, respectivement dérivés du premier et du second signal de réflexion détectée ;
le traitement des données dérivées des premier et second signaux de réflexion détectée pour s'approcher des réflexions provenant de la fibre optique en réponse à un signal de test de fonction delta, le traitement des données comprenant les étapes suivantes : pour chacun des premier et second signaux de réflexion détectée moyenne :
i) la détermination d'une première série temporelle de puissance instantanée de la fréquence de signal réfléchi correspondant à la première fréquence du signal de test ;
ii) la détermination d'une deuxième série temporelle de puissance instantanée de la fréquence du signal réfléchi correspondant à la deuxième fréquence du signal de test ; et
iii) la soustraction de la deuxième série temporelle de puissance instantanée à partir de la première série temporelle de puissance instantanée pour produire une série temporelle de puissance instantanée correspondant à un code bipolaire ;
la corrélation de la série temporelle de code bipolaire pour le premier signal de réflexion détectée moyenne avec le premier signal de test de code de Golay pour produire un premier signal corrélé ;
la corrélation de la série temporelle du code bipolaire pour le second signal de réflexion détectée moyenne avec le second signal de test de code de Golay pour produire un second signal corrélé ; et
l'ajout des premier et second signaux corrélés de façon à s'approcher des réflexions provenant de la fibre optique en réponse à un signal de test de fonction delta.

2. Procédé selon la revendication 1, le code de Golay étant un code de Golay bipolaire ayant un premier et un second état.

3. Procédé selon la revendication 1 ou 2,
l'étape de détermination de la première série temporelle de puissance instantanée du signal réfléchi comprenant la production d'un premier signal de réflexion abaissé en fréquence, la production des premiers signaux de réflexion abaissés en fréquence comprenant le mélange du premier signal de réflexion détectée moyenne avec un signal ayant une troisième fréquence (Δf), la troisième fréquence (Δf) étant sensiblement égale à la différence entre les deuxième et première fréquences ; et
l'étape de détermination de la deuxième série temporelle de puissance instantanée du signal réfléchi comprenant la production d'un deuxième signal de réflexion abaissé en fréquence, la production des seconds signaux de réflexion abaissés en fréquence comprenant le mélange du second signal de réflexion détectée moyenne avec un signal ayant la troisième fréquence (Δf).

4. Procédé selon la revendication 3, la production des premier et second signaux de réflexion abaissés en fréquence comprenant en outre :
le mélange du premier signal de réflexion détectée moyenne avec un signal ayant une quatrième fréquence, la quatrième fréquence étant sélectionnée pour compenser au moins partiellement tout changement dans la fréquence du signal source pendant un parcours aller-retour des signaux de test ; et
le mélange du second signal de réflexion détectée moyenne avec un signal ayant la quatrième fréquence, et facultativement la troisième fréquence étant sélectionnée pour compenser tout changement dans la fréquence du signal source pendant un parcours aller-retour des signaux et des réflexions de test.

5. Procédé selon la revendication 4, l'abaissement en fréquence des premier et second signaux de réflexion détectée moyenne étant réalisé par un processeur de signal numérique (210).

6. Procédé selon l'une quelconque des revendications 4 ou 5, comprenant en outre le filtrage passe-bas des premier et second signaux de réflexion détectée moyenne abaissés en fréquence pour produire des signaux de réflexion détectée moyenne démodulés, et comprenant facultativement en outre l'élévation au carré de chacun des premier et second signaux de réflexion détectée moyenne démodulés filtrés.

7. Procédé selon l'une quelconque des revendications précédentes, l'étape de traitement étant réalisée en utilisant un processeur de signal numérique (210).

8. Procédé selon l'une quelconque des revendications précédentes, comprenant l'utilisation d'un mélangeur électronique pour abaisser en fréquence les premier et second signaux de réflexion détectée moyenne en mélangeant au moins une partie des premier et second signaux de réflexion détectée moyenne avec un signal d'oscillateur local électronique ayant une troisième fréquence qui est sensiblement égale à la différence entre les deuxième et première fréquences ; et/ou
l'étape de détection étant réalisée en utilisant un détecteur complètement cohérent (214), pour détecter des signaux polarisés horizontalement en phase et en quadrature, et des signaux polarisés verticalement en phase et en quadrature, et comprenant en outre facultativement le moyennage de la puissance détectée par le détecteur complètement cohérent (214) ; et/ou
l'étape de détection étant réalisée en utilisant au moins une photodiode équilibrée.

9. Réflectomètre optique en domaine temporel (200) pour déduire des caractéristiques d'une fibre optique, comprenant :
une source laser (201), pouvant être utilisée pour émettre un signal optique de source ayant une première fréquence (f₁) ;
un modulateur de fréquence (203) agencé pour recevoir une première partie du signal optique de source et configuré pour coder la première partie du signal optique de source avec un premier signal de test de code de Golay et un second signal de test de code de Golay complémentaire, le premier signal de test de code de Golay et le second signal de test de code de Golay complémentaire comprenant chacun plusieurs états, le modulateur de fréquence étant configuré pour coder la première partie du signal optique de source avec le premier signal de test de code de Golay et le second signal de test de code de Golay complémentaire de telle sorte que l'un des états des codes de Golay est codé comme étant la première fréquence (f₁), et un autre état des codes de Golay est codé comme étant une deuxième fréquence (f₂), la deuxième fréquence (f₂) étant produite en décalant la fréquence du signal optique de la première fréquence (f₁) vers la deuxième fréquence (f₂) ;
une interface de sortie pour transmettre des premier et second signaux de test de code de Golay le long de la fibre optique ;
une interface d'entrée pour recevoir des réflexions du premier et du second code de Golay provenant de la fibre optique ;
un détecteur (206, 214) configuré pour recevoir une seconde partie du signal optique de source et les réflexions provenant de l'interface d'entrée de façon à hétérodyner les réflexions avec la seconde partie du signal optique de source et à produire un premier et un second signal de réflexion détectée, correspondant respectivement aux premier et second signaux de test de code de Golay ;
un filtre passe-bas (207) agencé pour filtrer les premier et second signaux de réflexion détectée ;
un convertisseur analogique-numérique (208), configuré pour recevoir les premier et second signaux de réflexion détectée ;
une mémoire (209) configurée pour stocker les premier et second signaux de réflexion détectée numérisés ;
un dispositif de commande et une horloge (205), **caractérisé en ce que**
le dispositif de commande est configuré pour fournir un signal d'horloge commun à la mémoire (209) et au modulateur de fréquence (203), et pour amener le modulateur de fréquence (203) à transmette de manière répétée les premier et second signaux de test de code de Golay ;
la mémoire (209) est configurée pour utiliser des informations de synchronisation provenant de l'horloge (205) pour stocker une moyenne des réflexions provenant des premier et second signaux de test de code de Golay ; et
un processeur (210) configuré pour traiter des données dérivées des premier et second signaux de réflexion détectée pour s'approcher des réflexions provenant de la fibre optique en réponse à un signal de test de fonction delta ;
le réflectomètre (200) étant configuré pour réaliser le procédé selon l'une quelconque des revendications 1 à 8.

10. Réflectomètre (200) selon la revendication 9, le détecteur (206, 214) comprenant une photodiode équilibrée.

11. Réflectomètre (200) selon l'une quelconque des revendications 9 ou 10, le processeur (210) comprenant un processeur de signal numérique ; et/ou
comprenant en outre un mélangeur électronique configuré pour démoduler le second signal de réflexion détectée en mélangeant le second signal de réflexion détectée avec un signal d'oscillateur local électronique sélectionné pour avoir sensiblement la même fréquence que la différence entre la deuxième et la première fréquence ; et/ou
le détecteur comprenant un détecteur complètement cohérent (214), configuré pour détecter des signaux polarisés horizontalement en phase et en quadrature, et des signaux polarisés verticalement en phase et en quadrature ; et/ou
comprenant en outre un dispositif d'affichage (211) pour afficher des résultats dérivés du traitement des données par le processeur (210).

12. Réflectomètre (200) selon l'une quelconque des revendications précédentes, comprenant en outre :
une fibre optique aval pour transmettre des signaux dans une première direction, et une fibre optique amont pour transmettre des signaux dans une seconde direction opposée :
un chemin de rétroaction optique (303) et un recirculateur (302), reliant une partie de la fibre optique aval à une partie de la fibre optique amont ;
l'interface de sortie comprenant la fibre optique aval, et l'interface d'entrée comprenant la fibre optique amont ; et
comprenant facultativement en outre au moins un étage d'amplification optique (301) couplé à la fibre aval entre le modulateur de fréquence (203) et le recirculateur (302).

13. Réflectomètre (200) selon la revendication 12, le chemin de rétroaction optique (302) comprenant un filtre configuré pour éliminer une longueur d'onde de pompage Raman.

14. Système optique comprenant une liaison par fibre optique et le réflectomètre (200) selon l'une quelconque des revendications 9 à 11,
la liaison par fibre optique comprenant un premier tronçon de fibre optique aval et un premier tronçon de fibre optique amont ;
l'interface de sortie du réflectomètre (200) étant connectée au premier tronçon de fibre optique aval, et l'interface d'entrée du réflectomètre étant connectée au premier tronçon de fibre optique amont.

15. Système selon la revendication 14, comprenant en outre au moins un tronçon de fibre optique aval et un tronçon de fibre optique amont supplémentaires et au moins un amplificateur optique disposé entre chaque tronçon ; et facultativement l'au moins un amplificateur optique (301) comprenant une pompe Raman, configurée pour fournir une source de pompage Raman à au moins une des fibres d'au moins un tronçon optique, de façon à y produire une amplification Raman.
